(19) Europäisches Patentamt
European Patent Office
Office européen des brevets

(11) **EP 4 116 874 A1**

(12) **EUROPEAN PATENT APPLICATION**

(43) Date of publication:
**11.01.2023 Bulletin 2023/02**

(21) Application number: **21305961.1**

(22) Date of filing: **09.07.2021**

(51) International Patent Classification (IPC):
***G06K 9/00*** *(2022.01)*     ***G06K 9/62*** *(2022.01)*

(52) Cooperative Patent Classification (CPC):
**G06K 9/6273; G06V 40/23**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA Toyota-shi, Aichi-ken 471-8571 (JP)**
• **Institut National de Recherche en Informatique et en Automatique 78150 Le Chesnay-Rocquencourt (FR)**

(72) Inventors:
• **FRANCESCA, Gianpiero 1140 BRUSSELS (BE)**
• **GARATTONI, Lorenzo 1140 BRUSSELS (BE)**
• **YANG, Di 06902 VALBONNE (FR)**
• **WANG, Yaohui 06902 VALBONNE (FR)**
• **BREMOND, François 06902 VALBONNE (FR)**
• **DANTCHEVA, Antitza 06902 VALBONNE (FR)**

(74) Representative: **Cabinet Beau de Loménie 158, rue de l'Université 75340 Paris Cedex 07 (FR)**

(54) **A METHOD FOR TRAINING A MACHINE LEARNING MODEL TO RECOGNIZE A PATTERN IN AN INPUT SIGNAL**

(57) A computer-implemented method (10) for training a machine learning model (M) to recognize a pattern in an input signal, based on an evolution of a graph representation (G1, G2, G3) within the input signal, the graph representation having a plurality of graph elements connected to one another, the method comprising providing (14) training data (12) comprising a series of said evolutions and respective annotated patterns, and training (16) the machine learning model (M) on the training data (12) to learn dependencies between pairs of the graph elements, wherein at least one of the dependencies ($W_i$) between two of the graph elements is initialized to a value which is independent from whether said two graph elements are adjacent.

FIG.1

**Description**

TECHNICAL FIELD

The present disclosure relates to the field of automatic recognition, and more particularly to a computer-implemented method for training a machine learning model to recognize a pattern in an input signal, such as a sequence of images. The method may find applications in all kinds of industries, including the automotive industry. For instance, the method may be used to train a machine learning model to understand a vehicle's environment in order to adequately control it, or to monitor and support human activities in places such as a factory.

TECHNOLOGICAL BACKGROUND

Machine learning models have been known for their ability to recognize patterns in an input signal. For the recognition to be performed, it is however necessary to provide a representation of the input signal which can be handled by the machine learning model.

For instance, in the case of a model configured to recognize human activities in a video, it is possible to model each human being by a graph representation. The vertices of the graph representation may correspond to some human being's joints, while the edges of the graph representation may correspond to some human being's bones. In other words, the graph more or less diagrammatically represents the human's skeleton.

Likewise, graph representations may be used for other types of patterns and other types of input signals. Nevertheless, for a given input signal, the choice of a graph representation is not universal: in the above example, one could choose to model a different number of landmarks (e.g. a single vertex for the human's head vs. several vertices for the mouth, nose, eyes, etc.) or put the vertices at different positions (e.g. top end of the neck vs. bottom end of the neck). So far, once trained on a given graph representation, a model could hardly adapt to another graph representation.

As a consequence, not only does a machine learning model require a large amount of training data specifically adapted to the graph representation used in operation (i.e. during testing), which is costly to produce, but also, the model cannot benefit from existing and available training datasets as soon as there is a difference between the graph representation of an available training dataset and the graph representation of the data used in operation.

SUMMARY

The object of the present invention is to at least substantially remedy the above-mentioned drawbacks.

In this respect, the present disclosure relates to a computer-implemented method for training a machine learning model to recognize a pattern in an input signal, based on an evolution of a graph representation within the input signal, the graph representation having a plurality of graph elements connected to one another, the method comprising providing training data comprising a series of said evolutions and respective annotated patterns, and training the machine learning model on the training data to learn dependencies between pairs of the graph elements, wherein at least one of the dependencies between two of the graph elements is initialized to a value which is independent from whether said two graph elements are adjacent.

For the sake of conciseness, this method is referred to hereinafter as the training method.

A machine learning model (or "model") may comprise one or more mathematical expressions configured to process the input signal, or at least the graph representation, in order to output information representative a pattern recognized in that input signal. Weights of the model may be iteratively updated by the training method. The model may comprise an artificial neural network, e.g. a graph convolutional network. An artificial neural network (ANN) is a computational model with one or more neurons, each neuron having a transfer function. The ANN therefore has a global transfer function that allows the calculation of at least one output as a function of at least one input. The neurons may be structured in one or more layers. The transfer functions of each neuron or the relative weights of the neurons in the network can be weighted by coefficients called synaptic weights (or "weights") and biases. The weights can be modulated according to the learning (or training) of the ANN. In principle, learning comprises providing the ANN with a set or series of situations, known as training data, in which inputs (here, the input signals or at least the evolutions of the graph representation) and outputs (here, the patterns) are known. During the learning process, the ANN adapts its synaptic weights and biases to conform to the learned situations, possibly with some tolerance.

The input signal may be obtained from a sensor, e.g. a microphone, an imaging device such as a camera, electrodes, etc. The input signal may be pre-processed so that the evolution of the graph representation is input to the machine learning model.

The graph comprises a plurality of graph elements, e.g. vertices and/or edges. The graph elements may represent landmarks of the input signal.

The graph representation is assumed to be the same throughout the training data, including the number and order of the graph elements. For instance, the training data is annotated such that in all the evolutions thereof, graph element No. 2 always represents the left eye of a human body, and such that the position of graph element No. 2 is always determined as the center of the segment between the left eye right corner and the left eye left corner. The same kind of determination applies to all the graph elements, so that the training data is consistently constituted and annotated.

An evolution stands for a series of similar graph representations along an evolution dimension (e.g. time), wherein at least some properties of the graph elements may change during the evolution.

The graph representation may be represented in a space and may evolve over an evolution dimension. Although the space may be the usual two-dimensional or three-dimensional length space, the space is not limited to this example and may have a desired dimension number, each dimension representing any desired physical quantity. In the following, it is assumed that the properties of the graph elements may be represented in such a space, and therefore the properties of the graph elements are referred to as spatial positions of the graph elements, although they may not describe an actual physical position but other physical quantities (e.g. a level of sound, a current intensity, a current voltage, etc.).

Examples of patterns to recognize in an input signal based on an evolution of a graph representation comprise:

- human or animal activities in a sequence of images (e.g. a video), the graph representation modelling the human or animal body which evolves along a succession dimension of the images (e.g. along time in the video);
- an instrument and/or a speaker in an audio track, the graph representation modelling characteristic features of the sound (e.g. harmonics) which evolve along a time dimension of the audio track.

The training method comprises a training step to learn the dependencies between pairs of the graph elements. The dependencies may be learnt between all pairs of the graph elements.

Training strategies are known *per se* in the art and may be used in the context of the present method, however, the present method differs in that at least one of the dependencies between two of the graph elements is initialized to a value which is independent from whether said two graph elements are adjacent. Adjacent means that the two graph elements are directly connected to each other in the graph representation. Initialization refers to the very first value given to said dependency, i.e. the dependency was not given any value before being initialized.

Due to this initialization, said at least one dependency does not reflect the structure of the graph representation. Therefore, said at least one dependency does not include any information that is specific to the graph representation (e.g. adjacency between two graph elements). This enables the dependency after training to be much more generic and independent from the type of graph representation. Therefore, the trained machine learning model is more accurate and more generalizable.

The result of the recognizing performed by the machine learning model may be used for a variety of applications, including to control a vehicle or to control an assembly line in a factory, e.g. to stop an assembly line if a hazard is detected.

Optionally, the graph representation models an object or a living being and the pattern is an action (including an activity) performed by said object or said living being, respectively. As detailed above, other examples are envisaged.

Optionally, the machine learning model comprises multi-head aggregation for learning the dependencies. Thus, the machine learning model comprises a plurality of heads configured to focus on different dependencies (i.e. different aspects of the evolution of the graph representation, e.g. different body parts), and the machine learning method aggregates the results of the plurality of heads in order to improve accuracy. The heads are learnable. The multi-head aggregation may be used for learning the dependencies based on the graph element properties (e.g. spatial dimensions), and may not be used for learning the dependencies based on the evolution of the graph representation (e.g. temporal dimension).

Optionally, the dependencies represent a correlation between different graph elements. The dependencies are used to process the relationship between different the properties of the graph elements (e.g. the spatial relationship), as opposed to the evolution of a single graph element (e.g. the temporal relationship). For instance, the dependencies represent the spatial dependencies, and not the temporal dependencies.

Optionally, the dependencies are learnt over a sliding window along an evolution dimension. This enables aggregating information from a larger receptive field in the evolution dimension (e.g. a larger temporal receptive field), and therefore to improve accuracy of the recognizing to be performed by the machine learning model.

Optionally, the machine learning model comprises a plurality of blocks followed by a classifier, each block comprising a spatial long-short dependency unit and an evolutional long-short dependency unit. When the evolution dimension is time, the evolutional long-short dependency unit is a temporal long-short dependency unit.

Optionally, the spatial long-short dependency unit comprises an attention mechanism, and in particular a self-attention mechanism. This helps the machine learning model to focus on the most important parts of the dependencies.

Optionally, the evolutional long-short dependency unit comprises a dilation mechanism. The dilation coefficient may be different in each block, or the same in at least two of the blocks, possibly in all of the blocks. Dilation helps the machine learning model to improve accuracy.

Optionally, a majority of the dependencies between two of the graph elements are initialized to values which are independent from whether said two graph elements are adjacent, respectively. Optionally, all of the dependencies between two of the graph elements are initialized to values which are independent from whether said two graph elements are adjacent, respectively. For instance, the dependencies may be uniformly initialized, e.g. initialized with the same value or with random values following a uniform distribution within chosen boundaries. More generally, the dependencies may be initialized with at least three different values, optionally at least five different values.

Optionally, the dependency between two non-adjacent ones of the plurality of graph elements is initialized to a non-zero value. Zero may be a neutral value for adjacency within the graph representation, e.g. the adjacency is 1 if the graph elements are adjacent and 0 otherwise. Other neutral values may be used. Thus, a non-zero or non-neutral value means that adjacency in the graph is not taken into account, thus enabling the model to learn the dependencies independently of the type of graph representation chosen for the input signal.

Optionally, the plurality of graph elements comprises a plurality of vertices and/or a plurality of edges. The training method may even train two separate machine learning models, one trained with the vertices and the other trained with the edges, and merge (e.g. perform a two-stream fusion of) the scores obtained by the two models in order to increase accuracy of the recognizing.

Optionally, the input signal is selected from a group comprising a plurality of images, a video, an audio track, an electrical input.

The present disclosure is further directed to a computer-implemented method for fine-tuning a machine learning model to recognize a pattern in an input signal, based on an evolution of a graph representation within the input signal, the graph representation having a plurality of graph elements connected to one another, the method comprising providing a machine learning model having dependencies learnt during pre-training on first training data by the above-described method, and fine-tuning the machine learning model on second training data, wherein each of the first and second training data comprises a series of said evolutions and respective annotated patterns.

For the sake of conciseness, this method is referred to hereinafter as the fine-tuning method.

Fine-tuning the machine learning model on second training data includes training the pre-trained machine learning model on the second training data. Thanks to the dependencies being pre-learnt by the above described training method (also referred to as the pre-training method), the machine learning model can efficiently adapt to other training data during the fine-tuning.

Optionally, the graph representation in the first training data (first graph representation) differs from the graph representation in the second training data (second graph representation). Nevertheless, due to the pre-learnt dependencies not being dependent on the type of graph representation but only on the actual content of the input signal, the machine learning model has the ability of efficiency adapting to another graph representation during the fine-tuning.

For instance, the first graph representation and the second graph representation may differ from each other by the number of graph elements, the order of graph elements, or the location of the graph elements with respect to the modeled object/living being. The fine-tuning is able to reorder the dependencies. Besides, the different number of graph elements may be dealt with by adding dummy graph elements (e.g. duplicating some graph elements and the corresponding dependencies) in the one of the first graph representation and the second graph representation that has the fewer graph elements.

Optionally, the first training data comprises a greater series than the second training data. Thus, the machine learning model may be fine-tuned on a limited amount of data (second training data), provided that it has been pre-trained on a larger amount data (first training data), even if the patterns to be recognized or the graph representations of the data are not the same. In practice, this allows to pre-train the model on available generic training data and make the model learn high-level representation, and to produce only a limited amount of specific training data for the fine-tuning. Therefore, training is easier and less costly.

The present disclosure is further related to a computer program including instructions for executing the steps of the above described method for training a machine learning model to recognize a pattern in an input signal when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method for training a machine learning model to recognize a pattern in an input signal. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

BRIEF DESCRIPTION OF THE DRAWINGS

The invention and advantages thereof will be better understood upon reading the detailed description which follows, of embodiments given as non-limiting examples. This description refers to the appended drawings, wherein:

- Fig. 1 is a diagram illustrating a training method and a fine-tuning method according to an embodiment;
- Fig. 2 shows a plurality of graph representations of a human body;
- Fig. 3 shows the overall architecture of a machine learning model according to an embodiment;
- Fig. 4 shows the detailed architecture of some parts of the machine learning model of Fig. 3;
- Fig. 5 illustrates a difference between the training method according to an embodiment and a training method with a different dependency initialization.

DETAILED DESCRIPTION OF EMBODIMENTS

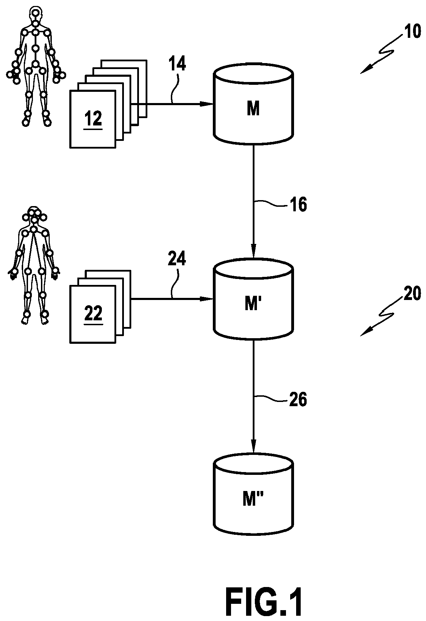

A training method 10 according to an embodiment is described with reference to Fig. 1. The training method 10 is a computer-implemented method for training a machine learning model M to recognize a pattern in an input signal, based on an evolution of a graph representation within the input signal. As will be detailed later, a graph representation comprises a plurality of graph elements connected to one another, e.g a plurality of vertices connected by edges or, conversely, a plurality of edges connected by vertices.

In this example, the machine learning model comprises a graph convolutional network. However, other machine learning models are envisaged.

Given first training data 12 comprising a series of said evolutions and respective annotated patterns, the training method 10 comprises a step 14 of providing the first training data 12. As indicated above, the graph representations may be extracted from the input signal by a pre-processing known *per se.*

The training method 10 further comprises a training step 16 of training the machine learning model M to be able to predict patterns based on an input signal, or an input evolution of a graph representation. In particular, the machine learning model M is trained on the first training data 12 to learn dependencies between pairs of the graph elements. The training step 16 will be further detailed hereinafter.

After the training step 16, the machine learning model M becomes a trained machine learning model M'.

Figure 1 also illustrates a fine-tuning method 20 according to an embodiment. The fine-tuning method 20 is a computer-implemented method for fine-tuning a machine learning model to recognize a pattern in an input signal, based on an evolution of a graph representation within the input signal.

The fine-tuning method 20 comprises a step of providing a machine learning model having dependencies learnt during pre-training on first training data. Specifically, the fine-tuning method 20 comprises providing the trained (or pre-trained) machine learning model M', the dependencies of which have been trained on the first training data 12.

Given second training data 22 comprising a series of evolutions and respective annotated patterns, the fine-tuning method 20 comprises a step 24 of providing the second training data 22. Like for the training method 10, the graph representations may be extracted from the input signal by a pre-processing known *per se.*

The fine-tuning method 20 further comprises a fine-tuning step 26 of fine-tuning the pre-trained machine learning model M' to be able to predict patterns based on an input signal, or an input evolution of a graph representation. In particular, the pre-trained machine learning model M' is retrained on the second training data 22 to fine-tune dependencies between pairs of the graph elements.

After the fine-tuning step 26, the pre-trained machine learning model M' becomes a fine-tuned machine learning model M".

As schematically illustrated in Fig. 1, the first training data 12 may comprise a greater series of annotated evolutions than the second training data 22. Thus, the machine learning model M may be pre-trained on a relatively large amount of possibly generic data and the resulting pre-trained machine learning model M' may be fine-tuned with a relatively small amount of possibly more specific data.

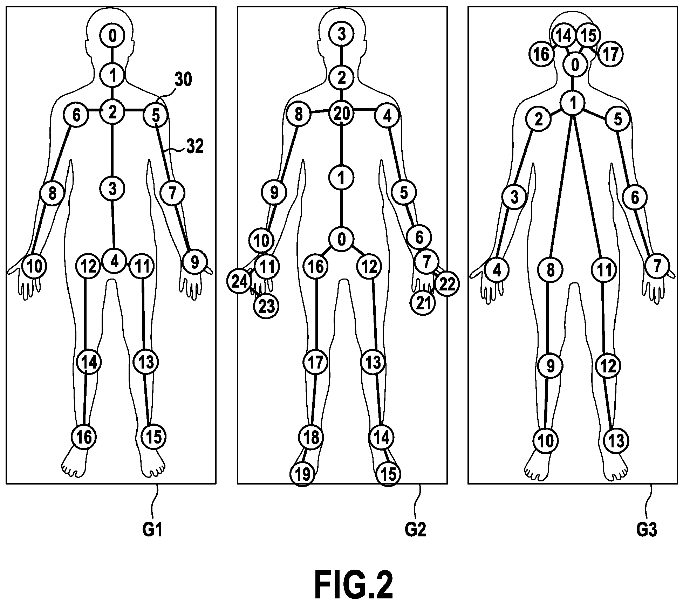

Figure 2 illustrates that the graph representations may vary from one training dataset to another, although representing the same content. For instance, Fig. 2 shows three graph representations G1, G2 and G3 of a same human body. Each graph representation comprises vertices 30 connected to one another by edges 32 (or, conversely, edges 32 connected to one another by vertices 30).

While the first graph representation G1 has 16 vertices, the second graph representation G2 has 24 vertices and the third graph representation G3 has 17 vertices. Therefore, the number of graph elements (vertices and/or edges) may vary from one graph representation to another.

Besides, while the vertices of the first graph representation G1 are ordered from the head to the feet, the vertices of the second graph representation G2 are numbered from the navel to the end portions, and the vertices of the third graph representation G3 are numbered from the mouth to the end portions. Therefore, the order of the graph elements may vary from one graph representation to another.

Besides, the positions (i.e. the spatial positions, or more general the properties) of the graph elements with respect to the body may vary. For instance, the first and second graph representations G1, G2 have respective vertices for tracking the neck, whereas the third graph representation G3 does not track the neck itself but the mouth instead.

As shown in Fig. 1, the graph representation in the first training data 12 may differ from the graph representation in the second training data 22. Nevertheless, thanks to the initialization described hereinafter, the pre-trained machine learning model M', although being first trained on the first training data 12, can adapt to the second training data 22 and be fine-tuned efficiently on that basis.

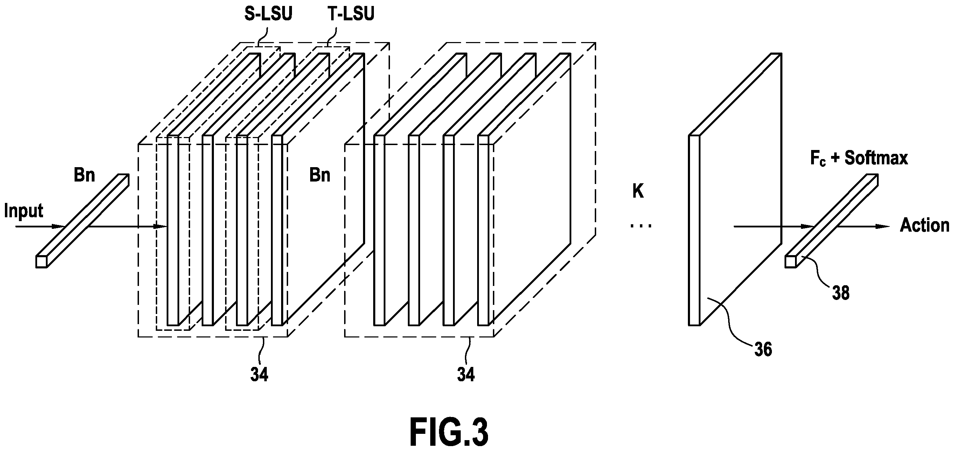

In the following, an embodiment of the training method 10 is detailed with reference to Figs. 3 to 5, focusing on an application to recognizing actions in a video, i.e. recognizing a pattern in an input signal, wherein each pattern corresponds to an action performed in the input signal which is a video, and the graph representation models an object or a living being (here, a human) performing or subject to the action in a 2D or 3D length space. In this embodiment, a graph representation is also referred to as a skeleton, for greater conciseness and intelligibility. However, the principles explained hereinafter can be generalized by the skilled person to any pattern other than actions, graph representations representing anything else than an object or a living being, and/or any input signal other than a video. For example, the input signal may be selected from a group comprising a plurality of images, a video, an audio track, an electrical input, etc.

As shown in Fig. 3, the machine learning model M comprises a plurality of blocks 34, here K building blocks, followed by a classifier 38. Each block comprises a spatial long-short dependency unit S-LSU and an evolutional (here temporal) long-short dependency unit T-LSU. The transfer function of each building block $ST\text{-}LS_{block}$ is formulated as follows.

$$f_{out} = \text{ST} - \text{LS}_{block}\,(f_{in}) = \text{T} - \text{LSU}\,(\text{S} - \text{LSU}\,(f_{in})) \qquad (1)$$

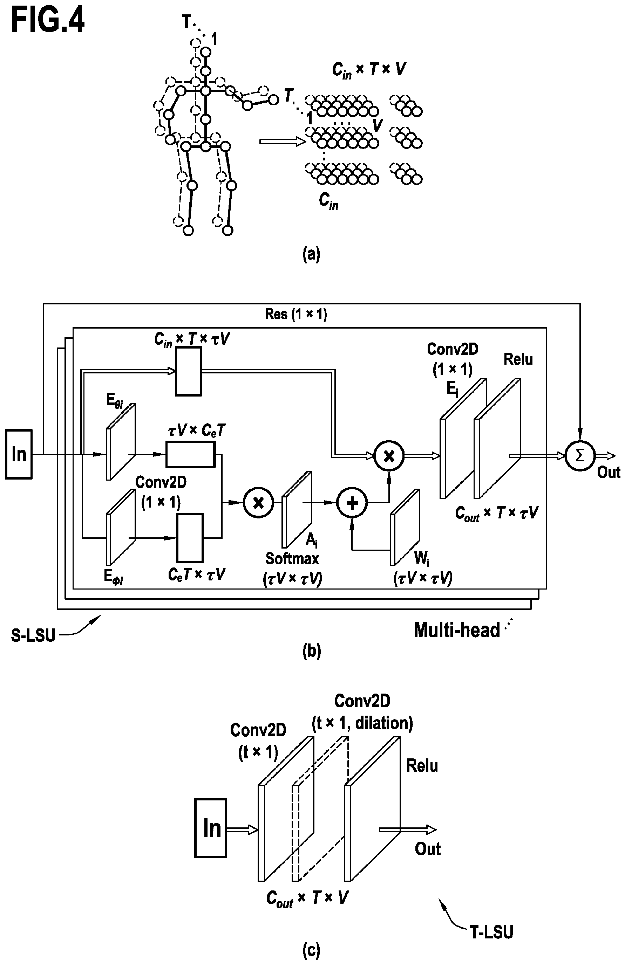

Where $f_{out}$ is the output of the building block 34 and $f_{in}$ is the input of the building block 34. For the first block 34, the input $f_{in}$ is a 3D spatiotemporal matrix modeling the sequence of the input skeletons (see Fig. 4(a)). For each frame of the video, i.e. each temporal coordinate, the 2D or 3D body joint coordinates (i.e. vertex coordinates) are arranged in a vector preserving their order and position within the spatial dimensions. For the spatial dimension, the order and position of the joints should be the same for all the frames in the video, and even preferably for all the evolutions in the first training data 12. For the temporal dimension, the same body joints in two consecutive frames are connected. $T$, $V$, and $C_{in}$ respectively represent the length of the video (corresponding to the number of frames, more generally corresponding to the number of points in the evolution dimension), the number of joints of the skeleton in one frame, and the input channels (2D or 3D at the beginning and expanded within the building blocks). The number of input channels in increased, as compared to the skeleton dimensions, in order to facilitate classification. The input $f_{in}$ and the output $f_{out}$ for each building block 34 are represented by a matrix in $\mathbb{R}^{C_{in}\times T\times V}$ and a matrix in $\mathbb{R}^{C_{out}\times T\times V}$, respectively.

The input $f_{in}$ of the subsequent blocks 34 are the output of the previous block, as shown in Fig. 3.

The spatial long-short dependency unit S-LSU and the evolutional long-short dependency unit T-LSU may be followed by a 2D Batch normalization layer Bn, respectively. A 1D Batch normalization layer may be added in the beginning for the flattened input data (i.e. the input data has been flattened before being input to the 1D Batch normalization, and the 1D Batch normalization normalizes the data). Given a skeleton sequence, the modeled data is fed into the building blocks. After the last block, global average pooling 36 may be performed to pool feature maps of different samples to the same size. Finally, the fully connected classifier 38 outputs the prediction of the human action. The number of blocks K and the number of output channels should be adaptive to the size of the training set, as a large network cannot be trained with a small dataset. However, in this embodiment, it is assumed that the machine learning model M is pre-trained on a large and generic dataset (see Fig. 1). Thus, $K$ is set to $K = 10$, with the number of output channels 64, 64, 64, 64, 128, 128, 128, 256, 256, 256.

The spatial long-short dependency unit S-LSU is now described with reference to Fig. 4(b). As illustrated, the spatial long-short dependency unit S-LSU comprises multi-head aggregation for learning the dependencies. Besides, in order to stabilize the training and ease the gradient propagation, a residual connection is added. Thus, in this embodiment, the spatial long-short dependency unit S-LSU is formulated as follows:

$$f_{out} = \text{S} - \text{LSU}\,(f_{in}) = f_{in} + \sum_{i=1}^{N} E_i \cdot (f_{in} \times (W_i + A_i)), \qquad (2)$$

where N represents the number of heads. For instance, there may be between two and five heads, for instance three heads. $E_i \in \mathbb{R}^{C_{out} \times C_{in} \times 1 \times 1}$ denotes the 2D convolutional weight matrix with $1 \times 1$ kernel size, which embeds (i.e. linearly projects) the features from $C_{in}$ to $C_{out}$ by the dot product. To aggregate the information from a larger spatial-temporal receptive field, a sliding temporal window (sliding window along an evolution dimension) of size $\tau$ is set over the input matrix. The size $\tau$ may range from 1 to 10, e.g. from 1 to 6. At each step, the input $f_{in}$ across $\tau$ frames in the window becomes in $\mathbb{R}^{C_{in} \times T \times \tau V}$. $W_i \in \mathbb{R}^{\tau V \times \tau V}$ is a dependency matrix, i.e. a matrix representing the dependencies for every pair of spatial features, i.e. for every pair of graph elements. Here, the dependencies represent a correlation between different graph elements. Note that $W_i$ is learnable and may be uniformly initialized as random values within bounds (Eq. 3).

$$W_i = \text{Uniform} \left( -bound, bound \right), \tag{3}$$

where

$$bound = \sqrt{\frac{6}{(1 + a^2)V}}, \tag{4}$$

where a denotes a constant indicating the negative slope. In this work, we take a = √5 as the initialization strategy of the fully connected layers, in order to efficiently find the optimized dependencies. However, other bounds could be selected.

Thus, at least one of the dependencies between two of the graph elements is initialized to a value which is independent from whether said two graph elements are adjacent. In this embodiment, a majority (here all) of the dependencies between two of the graph elements are initialized to values which are independent from whether said two graph elements are adjacent, respectively. This is an example of how the dependencies between two non-adjacent ones of the plurality of graph elements can be initialized to a non-zero value. As mentioned above, other examples are possible, e.g. initializing all the dependencies with a same value (e.g. 0 or 1 or the bound of Eq. (4)).

The matrix $A_i$ in Eq. (2) and Fig. 4(b) represents the non-local self-attention map that adapts the dependency matrix $W_i$ dynamically to the target action. In other words, the spatial long-short dependency unit S-LSU comprises an attention mechanism, and in particular a self-attention mechanism. This adaptive attention map is learned end-to-end with the action label. In more details, the input feature map $f_{in} \in \mathbb{R}^{C_{in} \times T \times \tau V}$ is first embedded into the space $\mathbb{R}^{C_e \times T \times \tau V}$ by two convolutional layers with $1 \times 1$ kernel size. $C_e$ is an intermediate embedded channel size, which may be chosen less than $C_{in}$ to reduce the computation cost. The convolutional weights are denoted as $E_{\theta i} \in \mathbb{R}^{C_e \times C_{in} \times 1 \times 1}$ and $E_{\phi i} \in \mathbb{R}^{C_e \times C_{in} \times 1 \times 1}$, respectively. As shown in Fig. 4(b), the two embedded feature maps are reshaped to $\tau V \times C_e T$ and $C_e T \times \tau V$ dimensions. They are then multiplied to obtain the attention map $A_i \in \mathbb{R}^{\tau V \times \tau V}$, whose elements represent the attention weights between each two joints (two vertices) adapted to different actions. The value of the matrix is normalized to $0 \sim 1$ using a softmax function. Thus, $A_i$ can be formulated as:

$$A_i = \text{Softmax} \left( (E_{\theta i}^T \cdot f_{in}^T) \times (E_{\phi i} \cdot f_{in}) \right). \tag{5}$$

As regards the temporal dimension, the length of the video is generally large. Using the same method as spatial dimension, establishing dependencies by $T \times T$ weights for every pair of frames, will consume too much calculation. Therefore, in this embodiment, multiple 2D convolutional layers are leveraged with kernels of different dilation coefficient d and temporal size $t$ on the $C_{out} \times T \times N$ feature maps to learn the multi-scale long-short term dependencies (see Fig.

4(c)). The T-LSU can be formulated as:

$$f_{out} = \mathrm{T} - \mathrm{LSU}\,(f_{in}) = \underset{2D(t\times 1,d)}{\mathrm{Conv}}(f_{in}). \qquad (6)$$

As mentioned above, the plurality of graph elements comprises a plurality of vertices and/or a plurality of edges. This embodiment uses a two-stream framework where in addition to the above machine learning model trained using the body joint features, a separate model with identical architecture is trained using the bone features initialized as vector differences of adjacent joints directed away from the body center. The respective softmax scores from the joint/bone models are summed to obtain final prediction scores.

As detailed above, this disclosure proposes to leverage a uniformly initialized dependency matrix to freely search for the optimized dependencies of the graph evolution without considering any human skeletal topology. In addition, multi-head aggregation with self-attention allows the model to jointly leverage information from different representation sub-spaces at different positions of the dependency matrix, without relying on prior knowledge. The uniformly initialized dependency matrix $W_i$, which already describes the long-short dependencies of the joints, is effective as it repeats the spatial processing and sums the outputs to automatically aggregate the features attended at different body joints. Therefore, the proposed training method 10 omits some manual operation with prior knowledge, while facilitating transfer learning and even improving performance of skeleton-based action recognition.

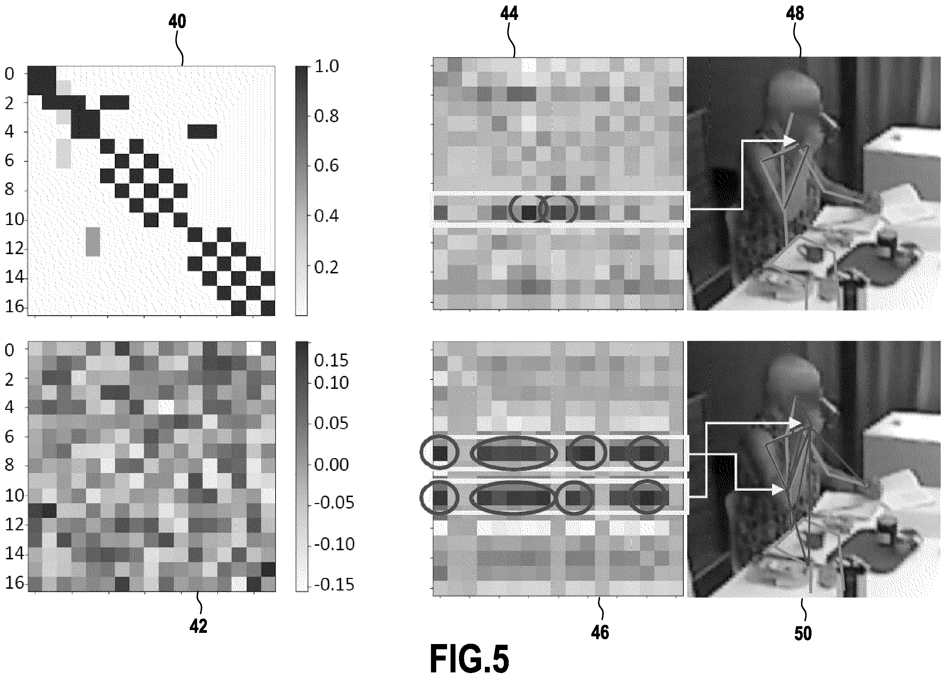

These effects can be visualized in Fig. 5, which illustrates the difference between the matrix $W_i$ being an adjacency matrix 40 initialized based on the adjacency of the graph elements (top row of Fig. 5), and the matrix $W_i$ being the above-described dependency matrix 42, wherein at least one of the dependencies between two of the graph elements is initialized to a value which is independent from whether said two graph elements are adjacent (bottom row in Fig. 5). Only the initialization of the dependencies changes, all the other parameters and structures being the same.

Specifically, the adjacency matrix 40 is initialized following Lei Shi, Yifan Zhang, Jian Cheng, and Hanqing Lu, *Two-stream adaptive graph convolutional networks for skeleton based action recognition,* In CVPR, 2019. Basically, the dependency between two joints is 1 (shown in black) if the joints are adjacent, and 0 (shown in white) otherwise, and this matrix A is multiplied by a degree matrix D representing the number of edges attached to each vertex. The adjacency matrix 40 is equal to $D^{-1/2} \times A^{1/2}$. In contrast, the dependency matrix 42 is uniformly initialized as described above.

The adjacency matrix 44 is the learnt adjacency matrix after ten blocks 34. In relation to the drinking action 48, it can be seen that only some of the dependencies characterizing the drinking action 48 have been learnt, due to the constraints included in the initialization. In contrast, the dependency matrix 46 learnt after then blocks 34 shows a richer content, as it inherently has the ability to learn more dependencies and therefore to model actions not only more accurately but also in a more generalizable manner. In other words, thanks to a better initialization, the dependency matrix 46 is able to explore longer range dependencies, while being based on a dependency matrix with self-attention, which freely searches for dependencies of the skeleton from the beginning without being constrained by the skeleton structure. This is highlighted in Fig. 5, which connects the salient portions of the dependency matrix 46 after learning to its meaning in terms of action in the drinking action 50.

Furthermore, test results show that the pre-trained machine learning model M' trained on that basis can be more efficiently fine-tuned. The fine-tuning step 26 may follow the same principles as the initial training step 16.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A computer-implemented method (10) for training a machine learning model (M) to recognize a pattern in an input signal, based on an evolution of a graph representation (G1, G2, G3) within the input signal, the graph representation having a plurality of graph elements connected to one another, the method comprising providing (14) training data (12) comprising a series of said evolutions and respective annotated patterns, and training (16) the machine learning model (M) on the training data (12) to learn dependencies between pairs of the graph elements, wherein at least one of the dependencies ($W_i$) between two of the graph elements is initialized to a value which is independent from whether said two graph elements are adjacent.

2. The computer-implemented method of claim 1, wherein the graph representation models an object or a living being and the pattern is an action performed by said object or said living being, respectively.

3. The computer-implemented method of claim 1 or 2, wherein the machine learning model comprises multi-head aggregation for learning the dependencies.

4. The computer-implemented method of any one of claims 1 to 3, wherein the dependencies represent a correlation between different graph elements.

5. The computer-implemented method of any one of claims 1 to 4, wherein the dependencies are learnt over a sliding window along an evolution dimension.

6. The computer-implemented method of any one of claim 1 to 5, wherein the graph representation is represented in a space and evolves over an evolution dimension, and the machine learning model comprises a plurality of blocks (34) followed by a classifier (38), each block comprising a spatial long-short dependency unit (S-LSU) and an evolutional long-short dependency unit (T-LSU).

7. The computer-implemented method of any one of claims 1 to 6, wherein a majority of the dependencies between two of the graph elements are initialized to values which are independent from whether said two graph elements are adjacent, respectively.

8. The computer-implemented method of any one of claims 1 to 7, wherein the dependency between two non-adjacent ones of the plurality of graph elements is initialized to a non-zero value.

9. The computer-implemented method of any one of claims 1 to 8, wherein the plurality of graph elements comprises a plurality of vertices (30) and/or a plurality of edges (32).

10. The computer-implemented method of any one of claims 1 to 9, wherein the input signal is selected from a group comprising a plurality of images, a video, an audio track, an electrical input.

11. A computer-implemented method (20) for fine-tuning a machine learning model to recognize a pattern in an input signal, based on an evolution of a graph representation (G1, G2, G3) within the input signal, the graph representation having a plurality of graph elements connected to one another, the method comprising providing a machine learning model (M') having dependencies learnt during pre-training on first training data (12) by the method (10) of any one of claims 1 to 10, and fine-tuning (26) the machine learning model (M') on second training data (22), wherein each of the first training data (10) and second training data (12) comprises a series of said evolutions and respective annotated patterns.

12. The computer-implemented method of claim 11, wherein the graph representation in the first training data (12) differs from the graph representation in the second training data (22).

13. The computer-implemented method of claim 11 or 12, wherein the first training data (12) comprises a greater series than the second training data (22).

14. A computer program including instructions for executing the steps of the method of any one of claims 1 to 13 when said program is executed by a computer.

15. A recording medium readable by a computer and having recorded thereon a computer program including instructions for executing the steps of the method of any one of claims 1 to 13.

**FIG.1**

**FIG.2**

**FIG.3**

EP 4 116 874 A1

# FIG.4

(a)

(b)

(c)

**FIG.5**

EP 4 116 874 A1

Europäisches
Patentamt

European
Patent Office

Office européen
des brevets

# EUROPEAN SEARCH REPORT

Application Number

EP 21 30 5961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHI LEI ET AL: "Skeleton-Based Action Recognition With Multi-Stream Adaptive Graph Convolutional Networks", IEEE TRANSACTIONS ON IMAGE PROCESSING, IEEE, USA, vol. 29, 9 October 2020 (2020-10-09), pages 9532-9545, XP011815656, ISSN: 1057-7149, DOI: 10.1109/TIP.2020.3028207 [retrieved on 2020-10-19] * abstract * * Section II.A * * Section III.B * * Section IV.A, IV.B; figures 2,6 * * Section V * * Section VII * | 1-15 | INV. G06K9/00 G06K9/62 |
| X,D | SHI LEI ET AL: "Two-Stream Adaptive Graph Convolutional Networks for Skeleton-Based Action Recognition", 2019 IEEE/CVF CONFERENCE ON COMPUTER VISION AND PATTERN RECOGNITION (CVPR), IEEE, 15 June 2019 (2019-06-15), pages 12018-12027, XP033686734, DOI: 10.1109/CVPR.2019.01230 [retrieved on 2020-01-08] * abstract * * Section 3.1, Section 3.3 * * Section 4.1, Section 4.2; figure 2 * | 1-15 | TECHNICAL FIELDS SEARCHED (IPC) G06K |

The present search report has been drawn up for all claims

| Place of search | Date of completion of the search | Examiner |
|---|---|---|
| The Hague | 29 November 2021 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)